## Europäisches Patentamt
## European Patent Office
## Office européen des brevets

(19)

(11) Numéro de publication : **0 368 705 B1**

(12)
# FASCICULE DE BREVET EUROPEEN

(45) Date de publication du fascicule du brevet :
**10.06.92 Bulletin 92/24**

(51) Int. Cl.⁵ : **A43B 7/02**

(21) Numéro de dépôt : **89402871.1**

(22) Date de dépôt : **17.10.89**

(54) **Chaussure de ski alpin ou de randonnée du type comportant un bas de coque sur lequel est articulé au moins un élément supérieur.**

(30) Priorité : **08.11.88 FR 8814553**

(43) Date de publication de la demande :
**16.05.90 Bulletin 90/20**

(45) Mention de la délivrance du brevet :
**10.06.92 Bulletin 92/24**

(84) Etats contractants désignés :
**AT CH DE IT LI**

(56) Documents cités :
**WO-A-86/05633**
**US-A- 3 663 796**
**US-A- 3 977 093**
**US-A- 4 180 922**
**US-A- 4 736 530**

(73) Titulaire : **SALOMON S.A.**
**Metz-Tessy**
**F-74370 Pringy (FR)**

(72) Inventeur : **Demarchi, Jean-Louis**
**Les Prés Bernard No 10**
**F-74410 Duingt (FR)**
Inventeur : **Mabboux, Michel**
**120 Chemin des Branchy**
**F-74600 Seynod (FR)**

(74) Mandataire : **Bruder, Michel et al**
**Cabinet Michel Bruder Conseil en Brevets 10, rue de la Pépinière**
**F-75008 Paris (FR)**

EP 0 368 705 B1

## Description

La présente invention concerne une chaussure de ski alpin ou de randonnée du type comportant un bas de coque sur lequel est articulé au moins un élément supérieur, mobile tel que capot arrière ou avant pour permettre le chaussage et le déchaussage, cette chaussure comportant une source d'énergie un dispositif consommateur d'énergie tel qu'un dispositif de chauffage et un dispositif commandant l'alimentation en énergie du dispositif consommateur

On connait déjà des chaussures de ski dans lesquelles sont incorporés, dans le but d'améliorer le confort du porteur des dispositifs de chauffage soit du type électrique, à résistance chauffante, soit du type à combustible liquide ou gazeux, qui utilisent dans ce cas un réservoir de combustible et un brûleur logés dans la chaussure. Les dispositifs de chauffage à combustible liquide ou gazeux présentent l'avantage, par rapport aux dispositifs électriques, de permettre d'obtenir une plus grande autonomie et d'assurer, pendant une période de temps relativement longue, la température de confort désirée à l'intérieur de la chaussure.

Les dispositifs de chauffage utilisant un combustible liquide tels que décrits, par exemple, dans les brevets IT 1 136 269 et FR-A-2 080 146, comportent généralement un bruleur à combustible liquide rechargeable, lequel est disposé sous une plaque de diffusion de la chaleur incorporée dans la semelle de la chaussure de manière à s'étendre le plus près possible du pied du porteur de la chaussure. D'autres dispositifs de chauffage qui utilisent un combustible gazeux, comprennent un réservoir de gaz alimentant, à travers une vanne un bruleur catalytique, tous ces éléments étant également logés en totalité dans la semelle de la chaussure. De tels dispositifs de chauffage à combustible gazeux sont décrits, par exemple, dons le modèle d'utilité italien 196850 et dans la demande de brevet internationale WO86/05663. Ces dispositifs de chauffage à combustible gazeux sont du type à réservoir de gaz rechargeable et il est nécessaire par conséquent de prévoir, dans la semelle de la chaussure qui contient le réservoir, un orifice à travers lequel le réservoir de gaz interne peut être raccordé à une source de recharge en gaz externe.

Tous les dispositifs de chauffage connus, qu'ils soient du type électrique ou à combustible liquide ou gazeux présentent l'inconvénient qu'une fois le chauffage mis en marche, l'arrêt de ce chauffage ne peut être obtenu que par intervention manuelle du porteur de la chaussure. Autrement dit celui-ci doit penser à couper le chauffage lorsqu'il quitte sa chaussure et il peut évidemment arriver qu'il oublie de procéder à cette manoeuvre, ce qui se traduit alors par une poursuite du chauffage de la chaussure déchaussée, d'où un épuisement rapide de la source d'énergie utilisée et un gaspillage de cette énergie.

La présente invention vise à remédier à ces inconvénients en procurant une chaussure pourvue de moyens provoquant automatiquement la coupure de l alimentation en énergie aussitôt que le porteur de la chaussure quitte celle-ci.

A cet effet cette chaussure de ski alpin ou de randonnée du type comportant un bas de coque sur lequel est articulé au moins un élément supérieur mobile, tel que capot arrière ou avant pour permettre le chaussage et le déchaussage, cette chaussure comportant une source d'énergie, un dispositif consommateur d'énergie, tel qu'un dispositif de chauffage et un dispositif commandant l'alimentation en énergie du dispositif consommateur, est caractérisée en ce qu'elle comprend des moyens de liaison entre l'élément supérieur mobile et le dispositif commandant l'alimentation en énergie afin d'autoriser l'alimentation en énergie du dispositif consommateur uniquement lorsque l'élément mobile de la chaussure est fermé et de provoquer automatiquement la coupure de cette alimentation aussitôt que l'élément mobile de la chaussure est ouvert.

L'invention s'applique plus particulièrement à une chaussure pourvue d'un dispositif de chauffage incorporé. Ce dispositif de chauffage peut être du type électrique et dans ce cas les moyens de liaison agissent sur un interrupteur électrique branché entre une source d'énergie électrique et une résistance chauffante. Le dispositif de chauffage peut être également du type à combustible liquide ou gazeux et dans ce cas les moyens de liaison agissent sur un robinet ou une vanne branchée entre un réservoir de gaz ou liquide combustible et un brûleur.

On décrira ci-après, à titre d'exemple non limitatif, une forme d'exécution de la présente invention en référence au dessin annexé sur lequel :

La figure 1 est une vue en coupe verticale et longitudinale partielle d'une chaussure de ski alpin à entrée arrière pourvue d'un dispositif de chauffage à gaz, le capot arrière étant représenté en position de fermeture et le dispositif de commande de l'alimentation en gaz étant en position d'ouverture.

La figure 2 est une vue en coupe verticale et longitudinale partielle de la chaussure avec le capot arrière fermé, le dispositif de commande de l'alimentation en gaz étant représenté dans une position intermédiaire, en cours de déverrouillage, avant son retour en position de fermeture.

La figure 3 est une vue en coupe verticale et longitudinale partielle de la chaussure avec le capot arrière fermé, le dispositif de commande de l'alimentation en gaz étant représenté en position d'allumage.

La figure 4 est une vue en coupe verticale et longitudinale partielle de la chaussure avec le capot arrière ouvert et le dispositif de commande d'alimentation en gaz rappelé automatiquement en position d'ouverture.

Les figures 5 et 6 sont des vues en coupe longitudinale partielles de variantes d'exécution d'une chaussure à capot arrière basculant suivant l'invention.

La figure 7 est une vue en coupe verticale et longitudinale partielle d'une variante d'exécution d'une chaussure comportant une manchette avant et un capot arrière articulés autour d'un même axe.

La figure 8 est une vue en coupe verticale et longitudinale partielle d'une chaussure suivant l'invention comportant une languette ou capot avant en tant qu'élément mobile supérieur.

La chaussure de ski alpin suivant l'invention qui est représentée sur les lignes 1 à 4 est du type à entrée arrière. Cette chaussure comprend un bas de coque 1 sur lequel est articulé un capot arrière 2, autour d'un axe inférieur horizontal et transversal 3. Cet axe 3 s'étend un peu en arrière de la partie extrême supérieure de la paroi postérieure 1a du bas de coque 1. La chaussure est pourvue d'un dispositif de chauffage qui, dans le cas de la forme d'exécution non limitative présentement décrite, est du type à gaz combustible. Toutefois l'invention s'appliquerait de la même façon à une chaussure pourvue d'un dispositif de chauffage électrique ou à combustible liquide. Le dispositif de chauffage comprend un ensemble chauffant 4 qui est logé dans un évidement de forme appropriée prévu dans la partie supérieure de la semelle 5 de la chaussure. Cet ensemble chauffant 4 comprend un brûleur 6 fixé, par exemple par soudage, sous une plaque de diffusion de la chaleur 7 elle-même placée sous la semelle interne 8 de la chaussure, afin de pouvoir chauffer le pied du skieur par grand froid. Le brûleur 6 est relié à un tube d'alimentation en gaz 11 et l'allumage du gaz est réalisé au moyen d'une électrode 13 voisine du brûleur 3 et faisant partie d'un dispositif d'allumage, par exemple du type piézo-électrique.

L'ensemble chauffant 4 est alimenté en gaz à partir d'une cartouche de gaz combustible interchangeable 14 qui est maintenue dans un logement prévu dans la partie supérieure du capot arrière 2 de la chaussure, à l'intérieur de celui-ci. La cartouche de gaz 14 est disposée sensiblement verticalement avec son orifice de sortie du gaz dirigé vers le bas. Dans la description qui va suivre on considérera que le sens "vertical" est celui suivant lequel s'étend le capot arrière 2 alors qu'en fait la paroi postérieure 2a de ce capot est légèrement inclinée vers l'avant. La cartouche de gaz 14 est raccordée, à son extrémité inférieure, à un ensemble 15 formant robinet et détendeur relié, à sa partie inférieure au tube d'alimentation en gaz 11. Ce tube, en matière souple, passe à travers une ouverture 2b ménagée dans la paroi inférieure transversale 2c du capot 2 qui est inclinée de haut en bas et d'arrière en avant et qui s'étend en direction de la partie supérieure de la paroi postérieure 1a du bas de coque 1. Le tube 11 sort ainsi partiellement du capot 2 et il pénètre de nouveau dans la chaussure en passant à travers une ouverture 1b formée dans la paroi postérieure 1a du bas de coque, pour s'étendre jusqu'au brûleur 6 logé dans la semelle.

L'organe de commande d'ouverture et de fermeture du robinet 15 est constitué par un doigt 16 faisant saillie à l'extérieur du corps du robinet 15 et mobile dans une lumière verticale de ce corps. Le doigt 16 est repoussé vers le bas, en direction de sa position d'ouverture, par un ressort de rappel 17 logé à l'intérieur du robinet-détendeur 15. Le doigt 16 de commande du robinet 15 est actionné par une patte 18 faisant partie d'un dispositif 19 de commande du chauffage. Ce dispositif 19 agit également sur un poussoir 21 d'un allumeur 22, par exemple du type piézo électrique, qui est relié, par un conducteur électrique non représenté, à l'électrode 13 afin de produire une étincelle d'allumage.

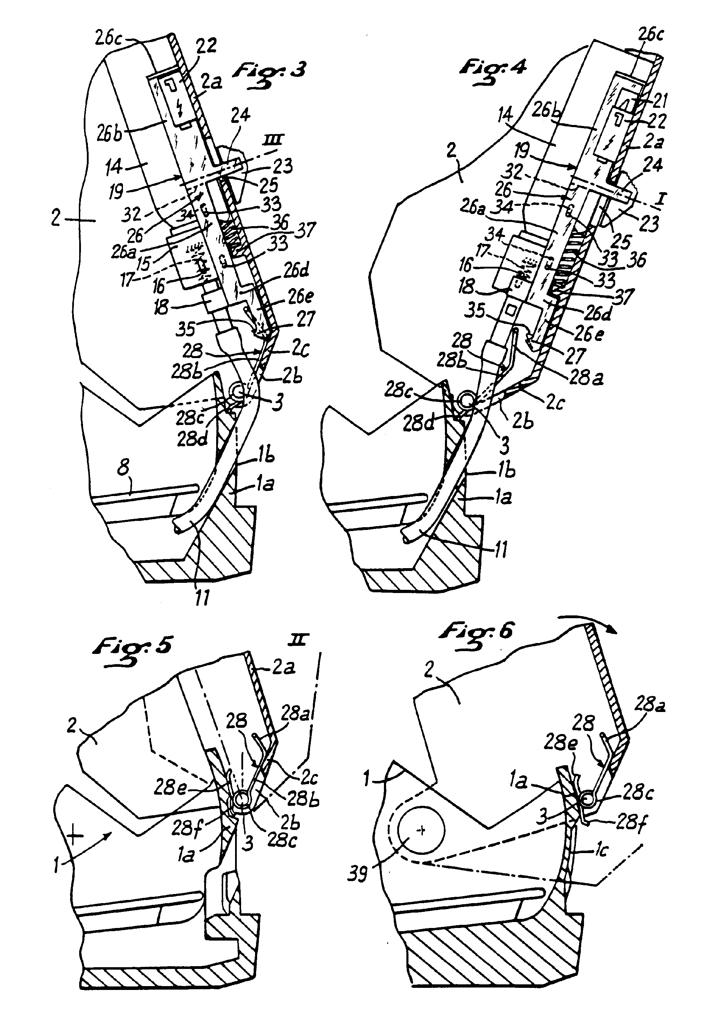

Le dispositif de commande du chauffage comprend un bouton de commande 23 qui peut coulisser "verticalement" à l'extérieur de la paroi postérieure 2a du capot 2. Le bouton de commande 23 est fixé à une patte 24 s'étendant à travers une lumière verticale 25 ménagée dans la paroi postérieure 2a du capot 2. La patte 24 constitue le prolongement externe d'une platine de déverrouillage volontaire 26 s'étendant verticalement. Cette platine de déverrouillage volontaire 26 comprend, une âme verticale 26a et à sa partie supérieure, une aile verticale 26b prolongée par une aile horizontale 26c qui s'étend à faible distance en position de fermeture du gaz, qui est représentée sur la figure 4, au-dessus du poussoir supérieur 21 de l'allumeur piézo-électrique 22 fixé au capot 2.

La platine de déverrouillage volontaire 26 comprend une aile horizontale inférieure 26d qui est prolongée vers le bas par une barre 26e se terminant par une rampe de déverrouillage 27 qui agit sur l'âme horizontale de la partie supérieure 28a, en forme de ganse ou de U inversé, d'un ressort de verrouillage 28. Ce ressort de verrouillage 28 est fixé à la partie supérieure de la paroi postérieure 1a du bas de coque 1 de la chaussure. Il comprend, en dessous de sa ganse supérieure 28a, deux branches parallèles 28b s'étendant vers le bas et inclinées par rapport à la ganse supérieure en formant un angle obtus ouvert vers l'avant. Chacune des deux branches 28b est reliée à une partie hélicoïdale 28c du ressort 28 enroulée autour de l'axe 3 d'articulation du capot arrière 2 et se terminant par une branche extrême d'ancrage 28d s'étendant vers le bas et immobilisée dans un logement prévu dans la partie supérieure de la paroi postérieure 1a du bas de coque 1.

Le dispositif de commande du chauffage comporte par ailleurs une seconde platine de verrouillage 32 qui est accolée à la platine de déverrouillage volontaire 26 et qui présente une forme de C ouvert vers l'arrière. Les deux platines 26 et 32 sont accouplées l'une à l'autre par l'intermédiaire de pions de guidage 33 prévus sur l'âme 26a de la platine de déverrouillage volontaire 26, ces pions 33 étant engagés dans des lumières 34 ménagées dans l'âme de l'autre platine 32, ces lumières 34 étant alignées et allongées verticalement. L'aile horizontale inférieure de la platine de verrouillage 32 est prolongée vers le bas par une barre qui se termine par un crochet de verrouillage 35 susceptible de venir s'agripper sous l'âme de la partie supérieure 28a du ressort de verrouillage 28. Par ailleurs la platine de verrouillage 32 porte, à sa partie inférieure, la patte 18 en saillie qui actionne, par en-dessous, le doigt 16 commandant l'ouverture et fermeture du robinet 15.

Les deux platines 26,32 sont sollicitées conjointement vers le haut par un ressort de rappel 36 qui est constitué par un ressort de compression prenant appui, à son extrémité inférieure, sur un épaulement 37 prévu sur la face interne de la paroi postérieure 2a du capot 2 et, à son extrémité supérieure, à la fois sous les ailes horizontales supérieures des platines 26 et 32. Le ressort 36 sollicite ainsi constamment les deux platines 26,32 vers le haut et leur mouvement dans ce sens est limité par la venue en butée des ailes inférieures des platines 26,32 sous l'épaulement d'appui 37.

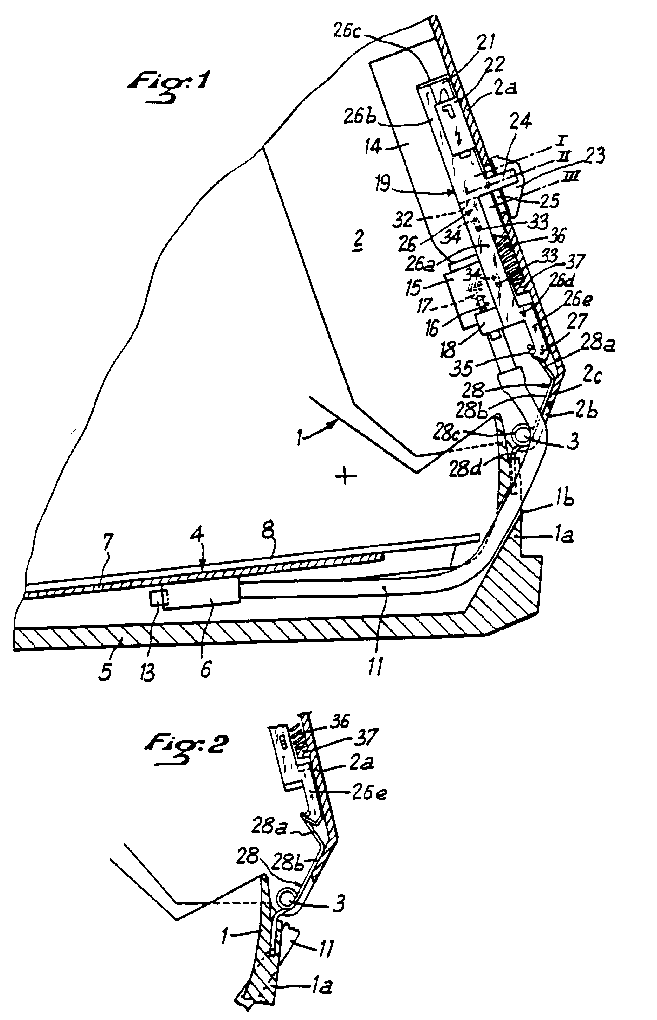

Le bouton de commande 23 peut occuper, dans la lumière 25, trois positions verticales différentes à savoir une position extrême supérieure I, correspondant à la fermeture de l'alimentation en gaz, une position intermédiaire II, correspondant à l'ouverture de l'alimentation en gaz, et une position extrême inférieure III, correspondant à l'actionnement de l'allumeur piézo-électrique 22, ces trois positions I,II,III étant indiquées en trait mixte sur la figure 1. En position supérieure de fermeture I les deux platines 26,32, se trouvent en position extrême supérieure (figure 4), dans laquelle elles sont repoussées par le ressort de rappel 36, leur mouvement vers le haut étant limité par la venue en butée de leurs ailes inférieures contre l'épaulement d'appui 37. Dans cette position l'aile horizontale supérieure 26c de la platine 26 est située à faible distance au-dessus du poussoir 21 de l'allumeur piézo-électrique 22.

Lorsque le skieur désire mettre en marche le dispositif de chauffage, il appuie sur le bouton de commande 23 de manière à le déplacer vers le bas. Dans ce mouvement le bouton de commande 23 entraîne avec lui la platine de déverrouillage volontaire 26 dont il est solidaire et celle-ci entraîne à son tour immédiatement la platine de verrouillage 32, du fait que les pions de guidage 33 qui sont solidaires de la platine 26, se trouvent en contact avec les extrémités inférieures des lumières 34 ménagées dans la platine 32. Les deux platines 26,32 sont ainsi déplacées conjointement vers le bas, à l'encontre de l'action du ressort de rappel 36. Au cours de ce mouvement le crochet de verrouillage 35 glisse le long de l'âme de la partie supérieure 28a du ressort 28 en la repoussant quelque peu, après quoi il vient se placer sous cette âme pour assurer le verrouillage. La rampe de déverrouillage 27 accompagne naturellement ce mouvement. Dans le même temps la patte 18 de la platine 32 libère le doigt 16 de commande du robinet 15 si bien que ce robinet s'ouvre. Par conséquent, aussitôt que le bouton de commande 23 atteint la position intermédiaire II, le robinet 15 est ouvert et le gaz contenu dans la cartouche interchangeable 13 peut alors s'écouler à travers le tuyau 11 en direction du brûleur 6 de l'ensemble chauffant 4.

Pour provoquer l'allumage du mélange gaz-air, le skieur appuie à fond sur le bouton de commande 23 de manière à l'amener dans sa position extrême inférieure III. Au cours de ce mouvement de descente complémentaire, l'aile horizontale supérieure 26c de la platine 26 qui se trouvait alors, dans la position intermédiaire II, juste en contact avec l'extrémité supérieure du poussoir 21, repousse ce poussoir vers le bas et provoque l'actionnement de l'allumeur piézo-électrique 22 qui émet une impulsion électrique donnant lieu à une étincelle d'allumage produite par l'électrode 13. Au cours de ce déplacement additionnel vers le bas la rampe de déverrouillage 27 et le crochet 35 sont déplacés un peu en dessous de l'âme de la partie supérieure 28a du ressort 28. Lors du relâchement du bouton de commande 23, après allumage du gaz, les deux platines 26,32 sont repoussées vers le haut par le ressort 36 jusqu'à ce que le crochet 35 vienne s'agripper en dessous de l'âme de la partie supérieure 28a du ressort 28. A partir de ce moment les deux platines 26,32 sont immobilisées dans la position intermédiaire d'ouverture II ainsi qu'il est représenté sur la figure 1. Dans cette position la patte 18 de la platine de verrouillage 32 se trouve située juste en dessous du doigt de commande 16 du robinet 15 qui se trouve lui-même dans sa position extrême inférieure d'ouverture dans une lumière du corps du robinet.

Lorsque le skieur désire arrêter le chauffage, il tire le bouton de commande 23 vers le haut pour le ramener dans sa position extrême supérieure de fermeture I. Au cours de cette phase de fermeture, le bouton de commande 23 entraîne tout d'abord le coulissement vers le haut de la seule platine de déverrouillage volontaire 26, du fait de l'accouplement réalisé par les pions de guidage 33 et les lumières 34, ces pions 33 se déplaçant alors seuls vers le haut dans les lumières 34 restant immobiles. Du fait de ce déplacement la rampe de déverrouillage inférieure 27 de la platine de déverrouillage volontaire 26 qui glisse au contact de l'âme de la partie supérieure 28a du ressort 28, repousse progressivement vers l'intérieur cette âme, en écartant ainsi progressivement le ressort jusqu'à ce que le crochet de verrouillage 35 puisse lui échapper. La pente de la rampe de déverrouillage 27 et sa longueur sont choisies de telle façon que l'échappement du crochet de verrouillage 35 se produise avant que les pions de guidage 33 n'atteignent les extrémités supérieures des lumières 34. Lorsque le crochet de verrouillage 36 échappe au ressort 28, la platine 32 est libérée et les deux platines 26,32 sont repoussées conjointement vers le haut, en position de fermeture, par le ressort 36. Dans ce mouvement la patte 18 de la platine 32 entraîne avec elle vers le haut le doigt 16 de commande du robinet 15, jusqu'à ce que celui-ci vienne se placer en position de fermeture, à l'extrémité supérieure de sa lumière de guidage.

Suivant l'invention la chaussure est pourvue de moyens provoquant automatiquement la coupure de l'alimentation en gaz aussitôt que le porteur de la chaussure quitte celle-ci. Ces moyens sont constitués, dans la forme d'exécution non limitative représentée sur les figures 1 à 4, par la combinaison de la paroi inférieure inclinée 2c du capot arrière 2 et du ressort de verrouillage 28. En fait suivant la position occupée par le capot arrière 2 le ressort 28 se trouve ou non armé en position de verrouillage. En effet lorsque le capot arrière 2 est fermé ainsi qu'il est représenté sur les figures 1 à 3, sa paroi inférieure inclinée 2c sollicite vers l'avant le ressort 28 et plus particulièrement les branches 28b de ce ressort, en le déformant et en le soumettant par conséquent à une pré-contrainte élastique. Dans cette position la partie supérieure 28a en forme de ganse du ressort 28 se trouve placée et maintenue dans une position telle qu'elle permet l'accrochage du crochet de verrouillage 35 de la platine de verrouillage 33.

Lorsque le skieur quitte sa chaussure, il fait basculer préalablement le capot arrière 2 vers l'arrière, autour de l'axe d'articulation 3, pour atteindre la position illustrée sur la figure 4. Au cours de ce mouvement la paroi inférieure inclinée 2c du capot arrière 2 libère les deux branches 28b du ressort 28 qui peut alors se détendre et au cours de la poursuite du mouvement de basculement du capot 2 vers l'arrière, le crochet de verrouillage 35 se trouve écarté de la partie supérieure 28a du ressort 28 comme il apparaît sur la figure 4. Par conséquent si, au moment où le skieur fait basculer le capot 2 vers l'arrière, le dispositif de chauffage se trouve être en fonctionnement, le basculement du capot 2 a pour conséquence qu'à un certain moment au cours de ce mouvement de basculement le crochet de verrouillage 35, précédemment accroché sous l'âme de la partie supérieure 28a du ressort 28 échappe à ce ressort si bien que les deux platines coulissantes 22,33 sont repoussées vers le haut par le ressort de compression 36. Comme dans le cas d'une action volontaire, la patte 18 repousse a lors vers le haut le doigt 16 de commande du robinet 15 ce qui entraîne la fermeture de celui-ci et la coupure automatique de l'alimentation en gaz.

Lors du chaussage le basculement du capot 2 vers l'avant provoque de nouveau une sollicitation du ressort 28 vers l'avant, sous l'action de la paroi inclinée 2c du capot 2, et la partie supérieure 28a de ce ressort reprend alors la position appropriée permettant l'accrochage du crochet de verrouillage 35.

Dans la variante d'exécution représentée sur la figure 5 les deux parties hélicoïdales 28c du ressort 28 qui sont enroulées sur l'axe d'articulation 3, se terminent respectivement par des branches extrêmes 28e s'étendant vers le haut et 28f s'étendant vers le bas, ces deux branches étant sensiblement coplanaires et étant en appui contre la face externe et supérieure de la paroi postérieure 1a du bas de coque 1. Pour le reste le ressort 28 est réalisé de la même façon que dans le cas de la chaussure illustrée sur les figures 1 à 4, la partie supérieure 28a du ressort 28 étant sollicitée vers l'avant par la paroi inférieure inclinée 2c du capot arrière 2.

Dans la variante d'exécution représentée sur la figure 6 le capot arrière 2 est articulé, sur le bas de coque 1, autour d'un axe inférieur transversal 39 qui est situé en avant de la paroi postérieure 1a du bas de coque 1. Dans ce cas les parties hélicoïdales 28c du ressort 28 sont enroulées au tour d'un axe transversal 3 qui est prévu à la partie inférieure du capot arrière 2 et qui sert uniquement au montage du ressort 28. Le ressort 28 est par ailleurs réalisé de la façon illustré sur la figure 5, c'est-à-dire qu'il comprend deux branches extrêmes 28e,28f s'étendant respectivement vers le haut et vers le bas à partir des parties hélicoïdales 28c. Ces deux branches extrêmes 28e,28f sont en appui, lorsque le capot arrière est fermé, comme il est représenté sur la figure 6, contre la face supérieure et postérieure de la paroi 1a du bas de coque 1, au-dessus d'un creux 1c ménagé dans cette face en assurant ainsi le maintien du ressort 28 à l'état armé, sous l'action de la paroi inférieure inclinée 2c du capot arrière 2. Lorsque le capot 2 est basculé vers l'arrière autour de l'axe transversal 39, l'axe 3 et le ressort 28 qu'il porte suivent ce mouvement et s'abaissent progressivement. A un certain moment au cours de ce mouvement de descente les deux branches 28e,28f du ressort 28 arrivent en regard d'un creux 1c prévu dans la partie inférieure de la face postérieure de la paroi 1a du bas de coque. Le ressort 28 se trouve alors désarmé et sa partie supérieure 28a est libérée et peut pivoter librement autour de l'axe 3, en provoquant alors automatiquement le déverrouillage du crochet 35 et la coupure automatique de l'alimentation en gaz comme dans le cas des formes d'exécutions précédemment décrites.

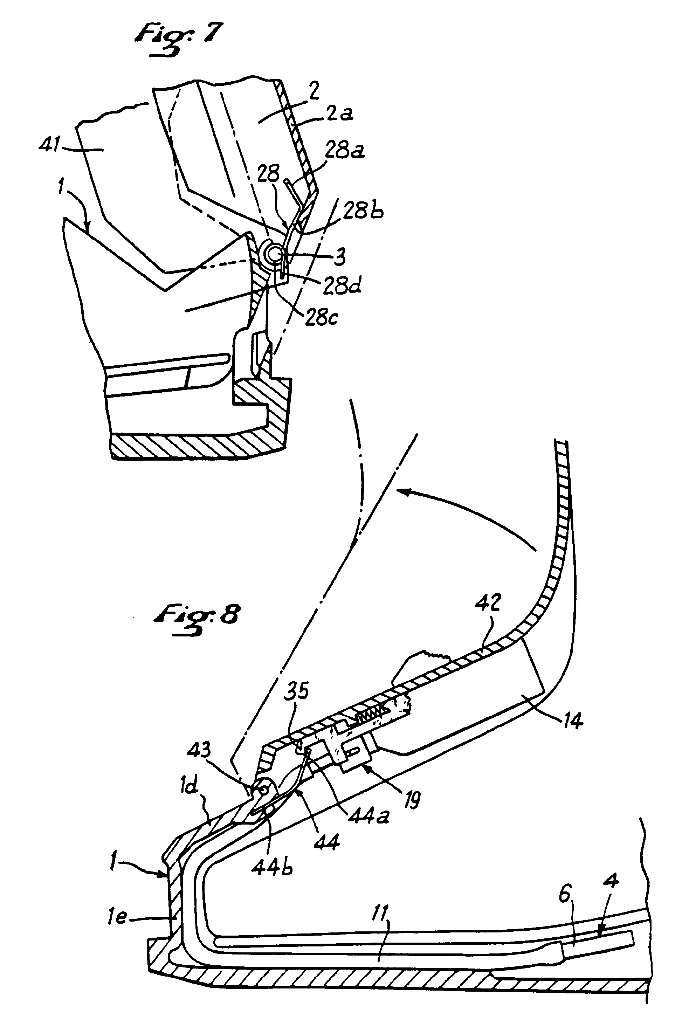

Dans la variante d'exécution représentée sur la figure 7 la chaussure comporte une tige constituée en deux parties articulées sur le bas de coque 1 autour de l'axe transversal commun 3, à savoir le capot arrière 2 et une manchette avant 41. Dans ce cas les branches extrêmes 28d qui prolongent les parties hélicoïdales 28c du ressort 28 enroulées sur l'axe 3, sont ancrées, à leurs extrémités, dans des parties de la manchette 41 proches de l axe d articulation 3 Les points d ancrage des extrémités du ressort 28 sur la manchette 41 sont disposés de telle façon que ce ressort soit armé, ou précontraint lorsque le capot arrière 2 est en position de fermeture Par conséquent lorsque le skieur ouvre la tige de sa chaussure par basculement du capot 2 vers l'arrière le ressort 28 est automatiquement désarmé et il libère alors le crochet de verrouillage 25 en provoquant ainsi la coupure automatique de l'alimentation en gaz

La figure 8 représente une variante d exécution de l invention appliquée à une chaussure de ski comportant sur sa face antérieure et supérieure une languette avant 42 qui est articulée à sa partie inférieure et antérieure sur une paroi antérieure et supérieure 1d du bas de coque 1 et ce autour d un axe horizontal et transversal 43 L ensemble constitué par la cartouche de gaz 14 et le dispositif 19 commandant l alimentation en gaz est monté sous la languette avant 42 en s étendant dans un plan vertical et longitudinal Le crochet de verrouillage 35 qui s étend vers l avant coopère alors avec la partie extrême postérieure 44a en forme de ganse, d un ressort de verrouillage 44. Ce ressort 44 comprend deux branches inférieures parallèles 44b par lesquelles il est ancré dans la paroi 1d du bas de coque 1 et qui sont inclinées de bas en haut et d'avant en arrière Ces branches d ancrage extremes 44b forment un angle obtus ouvert vers le haut avec la partie supérieure formant ganse 44a laquelle est par conséquent inclinée davantage de bas en haut et d avant en arrière Le crochet de verrouillage 35 vient alors s agripper derrière l'âme horizontale supérieure de cette partie en forme de ganse 44a Du fait de cette construction lorsque le skieur ouvre sa chaussure en faisant basculer la languette avant 42 dans le sens inverse des aiguilles d une montre autour de l'axe 43 le crochet de verrouillage 35 échappe à la partie supérieure 44a du ressort 44 ce qui provoque comme dans les formes d'exécutions précédemment décrites la coupure automatique de l alimentation en gaz.

Il est à noter que dans la forme d exécution de l invention décrite sur la figure 8, le tuyau flexible 11 d alimentation en gaz s'étend, à l intérieur de la chaussure à partir du dispositif de commande de la l alimentation 19 vers le bas et vers l avant sous la paroi supérieure inclinée 1d du bas de coque 1 puis verticalement le long de la paroi frontale antérieure 1e du bas de coque puis horizontalement vers l arrière sous la semelle interne 8 pour atteindre le bruleur 6.

**Revendications**

1. Chaussure de ski alpin ou de randonnée du type comportant un bas de coque (1) sur lequel est articulé au moins un élément supérieur mobile, tel que capot arrière (2) ou avant (42), pour permettre le chaussage et le déchaussage, cette chaussure comportant une source d'énergie (14), un dispositif consommateur d'énergie (6), tel qu'un dispositif de chauffage et un dispositif (19) commandant l'alimentation en énergie du dispositif consommateur, caractérisée en ce qu'elle comprend des moyens de liaison (2c,28, 44,35) entre l'élément supérieur mobile (2,42) et le dispositif (19) commandant l'alimentation en énergie afin d'autoriser l'alimentation en énergie du dispositif consommateur uniquement lorsque l'élément mobile (2,42) de la chaussure est fermé et de provoquer automatiquement la coupure de cette alimentation aussitôt que l'élément mobile (2,42) de la chaussure est ouvert.

2. Chaussure suivant la revendication 1 caractérisée en ce que le dispositif (19) commandant l'alimentation en énergie est porté par l'élément supérieur mobile (2,42) de la chaussure et les moyens de liaison entre l'élément supérieur mobile (2,42) et le dispositif (19) de commande de l'alimentation en énergie comprennent un crochet (35) de verrouillage en position d'ouverture, lequel est solidaire d'un élément mobile faisant partie du dispositif (19) de commande de l'alimentation en énergie et agissant sur un organe (15) formant interrupteur d'alimentation, et un organe d'accrochage (28,44) pour le crochet de verrouillage (35) disposé, par rapport ce crochet de verrouillage (35), de manière que, lorsque l'élément supérieur mobile (2,42) de la chaussure se trouve en position fermée, le crochet de verrouillage (35) puisse s'aggriper à l'organe d'accrochage (28), en maintenant l'organe (15) formant interrupteur d'alimentation en position d'ouverture, et que l'ouverture de l'élément supérieur mobile (2,42) de la chaussure provoque automatiquement la libération du crochet de verrouillage (35) par rapport à l'organe d'accrochage (28) et le passage de l'interrupteur d'alimentation en position de fermeture, en entraînant ainsi la coupure automatique de l'alimentation en énergie.

3. Chaussure suivant la revendication 2 caractérisée en ce que l'organe d'accrochage (28,44) est un ressort comportant une partie extrême (28a,44a) en forme de ganse ou de U contre l'âme de laquelle peut s'agripper le crochet de verrouillage (35).

4. Chaussure suivant la revendication 3 comportant, sur sa face antérieure et supérieure, une languette avant (42) qui est articulée, à sa partie inférieure et antérieure, sur une paroi antérieure et supérieure (1d) du bas de coque (1) et ce autour d'un axe horizontal et transversal (43), caractérisée en ce que le dispositif (19) commandant l'alimentation en énergie est monté sous la languette avant (42), en s'étendant dans un plan vertical et longitudinal, le crochet de verrouillage (35) qui s'étend vers l'avant, coopère avec la partie extrême postérieure (44a), en forme de ganse, d'un ressort de verrouillage (44) qui comprend deux branches parallèles (44b) par lesquelles il est ancré dans la paroi (1d) du bas de coque (1).

5. Chaussure suivant la revendication 4 caractérisée en ce que les branches d'ancrage extrêmes (44b) du ressort (44) forment un angle obtus, ouvert vers le haut, avec la partie supérieure formant ganse (44a) du ressort servant à l'accrochage du crochet de verrouillage (35).

6. Chaussure suivant la revendication 3, du type à entrée arrière, comportant un bas de coque (1) sur lequel est articulé un capot arrière (2) autour d'un axe inférieur horizontal et transversal, caractérisée en ce que le dispositif (19) commandant l'alimentation en énergie est porté par le capot arrière basculant (2) en s'étendant sensiblement verticalement le long de ce capot (2), il comporte, à sa partie inférieure, le crochet de verrouillage (35), et le ressort d'accrochage (28) est enroulé autour d'un axe (3) s'étendant horizontalement et transversalement à la partie inférieure du capot (2), ce ressort (28) comprenant, entre sa partie supérieure (28a) formant ganse pour l'accrochage du crochet de verrouillage (35) et l'axe d'enroulement (3) une partie intermédiaire (28b) sur laquelle agit une paroi inférieure inclinée (2c) du capot arrière (2).

7. Chaussure suivant la revendication 6 caractérisée en ce que la partie intermédiaire (28b) du ressort (28) qui s'étend entre l'axe d'enroulement (3) et la partie supérieure formant ganse (28a) est constituée de deux branches parallèles prolongeant vers le bas les deux branches de la partie extrême supérieure formant ganse (28a), les deux branches parallèles constituant la partie intermédiaire (28b) étant en contact avec la paroi inférieure inclinée (2c) du capot arrière (2) et formant un angle obtus ouvert vers l'avant avec la partie extrême supérieure formant ganse d'accrochage (28a).

8. Chaussure suivant l'une quelconque des revendications 6 et 7 caractérisé en ce que le ressort (28) comporte deux parties (28c) enroulées en hélice sur l'axe (3) et ces deux parties hélicoïdales (28c) sont prolongées par des branches extrêmes d'appui (28b;28e,28f).

9. Chaussure suivant la revendication 8 caractérisée en ce que l'axe transversal (3) sur lequel sont enroulées les parties hélicoïdales (28c) du ressort (8) est un axe d'articulation du capot arrière (2) sur le bas de coque (1).

10. Chaussure suivant la revendication 9 caractérisée en ce que chaque partie hélicoïdale (28c) du ressort (28) enroulée autour de l'axe (3) d'articulation du capot arrière (2) se termine par une branche extrême d'ancrage (28d) s'étendant vers le bas et immobilisée dans un logement prévu dans la partie supérieure de la paroi postérieure (1a) du bas de coque (1).

11. Chaussure suivant la revendication 10 caractérisée en ce que les deux parties hélicoïdales (28c) du ressort(28) qui sont enroulées sur l'axe d'articulation (3), se terminent respectivement par des branches extrêmes (28e) s'étendant vers le haut et (28f) s'étendant vers le bas, ces deux branches étant sensiblement coplanaires et étant en appui contre la face externe et supérieure de la paroi postérieure (1a) du bas de coque (1).

12. Chaussure suivant la revendication 8 caractérisée en ce que le capot arrière (2) est articulé, sur le bas de coque (1), autour d'un axe inférieur transversal (39) qui est situé en avant de la paroi postérieure (1a) du bas de coque (1) et les parties hélicoïdales (28c) du ressort (28) sont enroulées autour d'un axe transversal (3) qui est prévu à la partie inférieure du capot arrière (2) et qui sert uniquement au montage du ressort (28).

13. Chaussure suivant la revendication 12 caractérisée en ce que le ressort comprend deux branches extrêmes (28e,28f) s'étendant respectivement vers le haut et vers le bas à partir des parties hélicoïdales (28c), ces deux branches extrêmes (28e,28f) étant en appui, lorsque le capot arrière est fermé, contre la face supérieure et postérieure de la paroi (1a) du bas de coque (1), au-dessus d'un creux (1c) ménagé dans cette face

14. Chaussure suivant la revendication 8, comportant une tige constituée en deux parties articulées sur le bas de coque (1) autour d'un axe transversal commun (3), à savoir un capot arrière (2) et une manchette avant (41), caractérisée en ce que les branches extrêmes (28d) qui prolongent les parties hélicoïdales (28c) du ressort (28) enroulées sur l'axe (3), sont ancrées, à leurs extrémités, dans des parties de la manchette (41) proches de l'axe d'articulation (3).

15. Chaussure suivant l'une quelconque des revendications prédédentes caractérisée en ce que le dispositif consommateur d'énergie est un dispositif de chauffage qui comprend un ensemble chauffant (4) logé dans un évidement de forme appropriée prévu dans la partie supérieure de la semelle (5) de la chaussure, cet ensemble chauffant (4) comprenant un brûleur (6), et la source d'énergie est une cartouche de gaz combustible interchangeable (14) qui est portée, ainsi que le dispositif (19) commandant l'alimentation en gaz, par l'élément supérieur mobile (2,42) de la chaussure.

**Patentansprüche**

1. Alpin- oder Tourenschischuh mit einem schalenartigen Unterteil (1), auf dem gelenkig mindestens ein bewegliches Oberteil, wie eine hintere (2) oder vordere (42) Kappe, angebracht ist, um das Anziehen bzw. Ausziehen zu ermöglichen, wobei der Schuh eine Energiequelle (14), einen Energieverbraucher (6), wie etwa eine Heizvorrichtung, und eine die Energieversorgung des Energieverbrauchers steuernde Vorrichtung (19) enthält, *dadurch gekennzeichnet*, daß er zwischen dem beweglichen Oberteil (2, 42) und der die Energieversorgung steuernden Vorrichtung (19) Verbindungsmittel (2c, 28, 44, 35) umfaßt, die eine Energieversorgung des Energieverbrauchers nur zulassen, wenn das bewegliche Element ( 2, 42) des Schuhs geschlossen ist und die automatisch eine Unterbrechung dieser Energieversorgung sofort dann verursachen, wenn das bewegliche Element (2, 42) des Schuhs geöffnet ist.

2. Schuh nach Anspruch 1, *dadurch gekennzeichnet*, daß die die Energieversorgung steuernde Vorrichtung (19) vom oberen beweglichen Element (2, 42) des Schuhs getragen wird und die Verbindungsmittel zwischen dem oberen, beweglichen Element (2, 42) und der Steuervorrichtung (19) der Energieversorgung einen Haken (35) zur Verriegelung in Öffnungsstellung umfassen, der formschlüssig mit einem beweglichen, einen Teil der Vorrichtung (19) zur Steuerung der Energieversorgung bildenden und auf ein einen Unterbrecher der Versorgung bildendes Organ (15) einwirkenden Element verbunden ist, und daß eine Sperre (28, 44) für den Verriegelungshaken (35) in Bezug auf diesen Verriegelungshaken (35) derart angeordnet ist, daß dann, wenn sich das obere, bewegliche Element (2, 42) des Schuhs in geschlossener Stellung befindet, der Verriegelungshaken mit der Sperre (28) in Eingriff gelangen kann, um das den Unterbrecher der Versorgung bildende Organ (15) in Öffnungsstellung zu halten, und daß die Öffnung des oberen, beweglichen Elements (2, 42) des Schuhs automatisch die Freigabe des Verriegelungshakens (35) durch die Sperre (28) und den Übergang des Unterbrechers der Versorgung in die Schließstellung und damit die automatische Unterbrechung der Energieversorgung verursacht.

3. Schuh nach Anspruch 3, *ddadurch gekennzeichnet*, daß die Sperre (28, 44) eine Feder ist, die einen schleifen- oder U-förmigen Endabschnitt (28a, 44a) aufweist, dessen Steg der Verriegelungshaken (35) untergreifen kann.

4. Schuh nach Anspruch 3 mit einer an seiner oberen und vorderen Seite angeordneten vorderen Zunge (42), die mit ihrem unteren und vorderen Ende gelenkig über eine horizontal und quer verlaufende Achse (43) mit einem oberen und vorderen Abschnitt (1d) des schalenförmigen Unterteils (1) verbunden ist, *dadurch gekennzeichnet*, daß die die Energieversorgung steuernde Vorrichtung (19) unter der vorderen Zunge (42) angebracht ist und sich in einer vertikalen und in Längsrichung des Schuhs verlaufenden Ebene erstreckt, wobei der sich nach vorn erstreckende Verriegelungshaken (35) mit dem hintersten, schleifenförmigen Abschnitt (44a) einer Verriegelungsfeder (44) zusammenwirkt, die zwei parallele Schenkel (44b) aufweist, mittels der sie an der Wandung (1d) des schalenförmigen Unterteils verankert ist.

5. Schuh nach Anspruch 4, *dadurch gekennzeichnet*, daß die äußeren Verankerungsschenkel (44b) der Feder (44) mit dem eine Schleife (44a) bildenden und dem Verriegelungshaken (35) zum Eingriff zugeordneten oberen Abschnitt der Feder einen nach oben offenen stumpfen Winkel bilden.

6. Schuh nach Anspruch 3 der Bauform mit hinterem Zugang und mit einem schalenförmigen Unterteil (1) auf dem um eine untere, horizontal und quer verlaufende Achse eine hintere Klappe (2) angelenkt ist, *dadurch gekennzeichnet*, daß die die Energieversorgung steuernde Vorrichtung (19) von der verschwenkbaren, hinteren Klappe (2) getragen wird, sich im wesentlichen vertikal längs der Klappe (2) erstreckt und im unteren Abschnitt den Verriegelungshaken (35) umfaßt, daß die Sperrfeder (28) um eine Achse (3) gewunden ist, die sich horizontal und in Querrichtung am unteren Teil der Klappe (2) erstreckt, daß diese Feder (28) zwischen ihrem oberen, eine Schleife für den Eingriff des Verriegelungshakens (35) bildenden Abschnitt und der Windungsachse (3) einen Zwischenabschnitt (28b) bildet, der mit einer unteren, geneigten Wand (2c) der hinteren Klappe (2) zusammenwirkt.

7. Schuh nach Anspruch 6, *dadurch gekennzeichnet*, daß der Zwischenabschnitt (28b) der Feder (28), der sich zwischen der Windungsachse (3) und dem die Schleife bildenden, obren Abschnitt erstreckt, von zwei parallelen, nach unten verlängerten Schenkeln gebildet wird, die die beiden Schenkel des die Schleife (28a) bildenden obersten Abschnitts nach unten verlängern und daß die beiden den Zwischenabschnitt (28b) bildenden Schenkel mit der unteren, geneigten Wand (2c) der hinteren Klappe (2) in Kontakt stehen und und mit dem die Sperrschleife (28a) bildenden obersten Abschnitt einen nach vorn offenen stumpfen Winkel bilden.

8. Schuh nach einem der Ansprüche 6 oder 7, *dadurch gekennzeichnet*, daß die Feder (28) zwei Abschnitte (28c) aufweist, die schraubenförmig die Achse (3) umwinden, und daß diese beiden schraubenförmigen Abschnitte (28c) durch Anschlagschenkel 28b; 28e, 28f) verlängert sind.

9. Schuh nach Anspruch 8, *dadurch gekennzeichnet*, daß die Querachse (3), auf der die schraubenförmigen Abschnitte (28c) der Feder (28) aufgewunden sind, eine Schwenkachse der hinteren Klappe (2) auf dem schalenartigen Unterteil (1) ist.

10. Schuh nach Anspruch 9, *dadurch gekennzeichnet*, daß jeder um die Gelenkachse (3) der hinteren Klappe (2) gewundene, schraubenförmige Abschnitt (28c) der Feder (28) in einem äußeren Verankerungsabschnitt (28d) endet, der sich nach unten erstreckt und in einer im oberen Bereich der Rückwand (1a) des schalenartigen Unterteils (1) vorgesehenen Ausnehmung unbeweglich gehalten ist.

11. Schuh nach Anspruch 10, *dadurch gekennzeichnet*, daß die beiden um die Gelenkachse (3) gewundenen, schraubenförmigen Abschnitte (28c) der Feder (28) jeweils in einem sich nach oben (28e) bzw. nach unten (28f) erstreckenden äußeren Abschnitt enden, wobei diese beiden äußeren Abschnitte im wesentlichen in einer Ebene angeordnet sind und an der oberen Außenfläche der Rückwand (1a) des schalenartigen Unterteils (1) anliegen.

12. Schuh nach Anspruch 8, *dadurch gekennzeichnet*, daß die hintere Klappe (2) am schalenartigen Unterteil (1) um eine untere Querachse (39) verschwenkbar angeschlossen ist, die vor der Rückwand (1a) des schalenartigen Unterteils (1) angeordnet ist, und daß die schraubenförmigen Abschnitte (28c) der Feder (28) um eine Querachse (3) gewunden sind, die am unteren Abschnitt der hinteren Klappe (2) vorgesehen ist und nur der Montage der Feder (28) dient.

13. Schuh nach Anspruch 12, *dadurch gekennzeichnet*, daß die Feder zwei äußere Abschnitte (28e, 28f) aufweist, die sich ausgehend von den schraubenförmigen Abschnitten (28c) nach oben bzw. nach unten erstrecken, und daß diese beiden äußeren Abschnitte (28e, 28f) an der oberen, hinteren Wandfläche (1a) der schalenartigen Basis (1) oberhalb einer in dieser Wandfläche ausgebildeten Ausnehmung (1c) anliegen, wenn die hintere Klappe (2) geschlossen ist

14. Schuh nach Anspruch 8 mit einem Schaft, der aus zwei gelenkig mit dem schalenartigen Unterteil um eine gemeinsame Querachse (3) beweglich verbundenen Abschnitten besteht, nämlich einer hinteren Klappe (2) und einer vorderen Manschette (41), *dadurch gekennzeichnet*, daß die die schraubenförmigen, um die Achse (3) gewundenen Abschnitte (28c) der äußeren Schenkel (28d) der Feder (28) verlängernden äußeren Schenkel (28d) mit ihren Enden in der Gelenkachse (3) benachbarten Bereichen der Manschette (4) verankert sind.

15. Schuh nach einem der vorhergehenden Ansprüche, *dadurch gekennzeichnet*, daß der Energieverbraucher eine Heizvorrichtung ist, die eine in einer geeigneten Ausnehmung im oberen Teil der Sohle (5) des Schuhs angeordnete Heizanordnung (4) umfaßt. wobei diese Heizanordnung (4) einen Brenner (6) umfaßt und die Energiequelle eine auswechselbare Brenngaskartusche (14) ist, die ebenso wie die Vorrichtung (19) zur Steuerung der Gasversorgung vom oberen, beweglichen Element (2, 42) des Schuhs getragen wird.

**Claims**

1. Alpine or cross-country ski shoe of the type comprising a shell bottom (1) on which is articulated at least one mobile upper member, such as a rear (2) or front (42) cover to allow the shoe to be put on or taken off, this shoe comprising a source of energy (14), an energy consumer device (6) such as a heating device and a device (19) controlling supply of energy to the consumer device, characterized in that it comprises connection means (2c, 28, 44, 35) between the mobile upper element (2, 42) and the device (19) controlling the energy supply in order to allow supply of energy to the consumer device solely when the mobile element (2, 42) of the shoe is closed and automatically to provoke cut-off of this supply as soon as the mobile element (2, 42) of the shoe is open.

2. Shoe according to Claim 1, characterized in that the device (19) controlling energy supply is borne by the mobile upper element (2, 42) of the shoe and the connection means between the mobile upper element (2, 42) and the device (19) for controlling energy supply comprise a hook (35) for locking in open position, which is fast with a mobile element forming part of the energy supply control device (19) and acting on a member (15) forming supply switch, and a hooking member (28, 44) for the locking hook (35) disposed, with respect to this locking hook (35) so that, when the mobile upper element (2, 42) of the shoe is in closed position, the locking hook (35) may grip on the hooking member (28), maintaining the member (15) forming supply switch in open position, and opening of the mobile upper element (2, 42) of the shoe automatically provokes release of the locking hook (35) with respect to the hooking member (28) and the passage of the supply switch in position of closure, thus causing automatic cut-off of the energy supply.

3. Shoe according to Claim 2, characterized in that the hooking member (28, 44) is a spring comprising an end part (28a, 44a) in the form of loop or U against the web of which the locking hook (35) may grip.

4. Shoe according to Claim 3 comprising, on its front, upper face, a front tongue (42) which is articulated, in its lower, front part, on a front upper wall (1d) of the shell bottom (1) and this about a horizontal transverse axis (43), characterized in that the energy supply control device (19) is mounted beneath the front tongue (42), extending in a vertical and longitudinal plane, the locking hook (35) which extends forwardly, cooperates with the rear end part (44a), in loop form, of a locking spring (44) which comprises two parallel arms (44b) by which it is anchored in the wall (1d) of the shell bottom (1).

5. Shoe according to Claim 4, characterized in that the end anchoring arms (44b) of the spring (44) form an upwardly open obtuse angle with the upper part forming loop (44a) of the spring serving to hook the locking hook (35).

6. Shoe according to Claim 3, of the type with rear entry, comprising a shell bottom (1) on which is articulated a rear cover (2) about a lower horizontal and transverse axis, characterized in that the energy supply control device (19) is borne by the pivoting rear cover (2), extending substantially vertically along this cover (2), it comprises, in its lower part, the locking hook (35), and the hooking spring (28) is wound around a pin (3) extending horizontally and transversely in the lower part of the cover (2), this spring (28) comprising, between its upper part (28a) forming loop for hooking the locking hook (35) and the pin (3) for winding, an intermediate part (28b) on which acts an inclined lower wall (2c) of the rear cover (2).

7. Shoe according to Claim 6, characterized in that the intermediate part (28b) of the spring (28) which extends between the winding pin (3 ) and the upper part forming loop (28a) is constituted by two parallel arms downwardly extending the two arms of the upper end part forming loop (28a), the two parallel arms constituting the intermediate part (28b) being in contact with the inclined lower wall (2c) of the rear cover (2) and forming a forwardly open obtuse angle with the upper end part forming hooking loop (28a).

8. Shoe according to either one of Claims 6 and 7, characterized in that the spring (28) comprises two parts (28c) helically wound on the pin (3) and these two helical parts (28c) are extended by end bearing arms (28b; 28e, 28f).

9. Shoe according to Claim 8, characterized in that the transverse pin (3) on which are wound the helical parts (28c) of the spring (8) is a pivot pin for the rear cover (2) on the shell bottom (1).

10. Shoe according to Claim 9, characterized in that each helical part (28c) of the spring (28) wound around pin (3) for pivoting of the rear cover (2) terminates in an end anchoring arm (28d) extending downwardly and immobilized in a housing provided in the upper part of the rear wall (1a) of the shell bottom (1).

11. Shoe according to Claim 10, characterized in that the two helical parts (28c) of the spring (28) which are wound on pivot pin (3) terminate respectively in end arms (28e) extending upwardly and (28f) extending downwardly, the two arms being substantially coplanar and being in abutment against the outer, upper face of the rear wall (1a) of the shell bottom (1).

12. Shoe according to Claim 8, characterized in that the rear cover (2) is articulated, on the shell bottom (1), about a lower transverse pin (39) which is located in front of the rear wall (1a) of the shell bottom (1) and the helical parts (28c) of the spring (28) are wound around a transverse pin (3) which is provided in the lower part of the rear cover (2) and which serves solely for assembly of spring (28).

13. Shoe according to Claim 12, characterized in that the spring comprises two end arms (28e, 28f) extending respectively upwardly and downwardly from the helical parts (28c), these two end arms (28e, 28f) being in abutment, when the rear cover is closed, against the upper, rear face of the wall (1a) of the shell bottom (1), above a hollow (1c) made in this face.

14. Shoe according to Claim 8, comprising an upper constituted by two parts articulated on the shell bottom (1) about a common transverse pin (3), namely a rear cover (2) and a front spoiler (41), characterized in that the end arms (28d) which extend the helical parts (28c) of the spring (28) wound on pin (3) are anchored, at their ends, in parts of the spoiler (41) close to the pivot pin (3).

15. Shoe according to any one of the preceding Claims, characterized in that the energy consumer device is a heating device which comprises a heating assembly (4) housed in a recess of appropriate form provided in the upper part of the sole (5) of the shoe, this heating assembly (4) comprising a burner (6), and the source of energy is an interchangeable fuel gas cartridge (14) which is borne, as well as the gas supply control device (19), by the mobile upper element (2, 42) of the shoe.

EP 0 368 705 B1

Fig:1

Fig:2

11

Fig. 3

Fig. 4

Fig. 5

Fig. 6

Fig. 7

Fig. 8